# EUROPÄISCHE PATENTSCHRIFT

(11) **EP 4 227 165 B1**
(45) Veröffentlichungstag und Bekanntmachung des Hinweises auf die Patenterteilung: **29.07.2026**
(21) Anmeldenummer: 23176749.2
(22) Anmeldetag: 05.09.2019
(51) Int. Cl.: B60R 13/02

(54) **DURCHLEUCHTBARES VERKLEIDUNGSTEIL FÜR EIN KRAFTFAHRZEUG UND VERFAHREN ZUR HERSTELLUNG EINES VERKLEIDUNGSTEILS**
TRANSLUCENT TRIM PART FOR A MOTOR VEHICLE AND METHOD FOR PRODUCING A TRIM PART
PIÈCE D'HABILLAGE TRANSPARENTE POUR UN VÉHICULE AUTOMOBILE ET PROCÉDÉ DE FABRICATION D'UNE PIÈCE D'HABILLAGE

(30) Priorität: 02.10.2018 DE 102018124384
(43) Veröffentlichungstag der Anmeldung: 16.08.2023
(62) Teilanmeldung aus: 19195679.6
(73) Patentinhaber: RESRG Automotive SE & Co. KG, 95111 Rehau (DE)
(72) Erfinder: Göschel, Rick, 95183 Feilitzsch (DE); Valentin, Stefan, 08606 Triebel (DE)
(74) Vertreter: Grünecker Patent- und Rechtsanwälte PartG mbB

(56) Entgegenhaltungen:
- EP-A1- 2 218 610
- DE-A1- 102008 041 701
- DE-A1- 102010 051 166
- DE-A1- 102013 202 223
- DE-B4- 102010 032 190

## Beschreibung

Die vorliegende Erfindung betrifft ein durchleuchtbares Verkleidungsteil für ein Kraftfahrzeug umfassend einen Grundkörper aus einem transluzenten oder transparenten Polymermaterial, welches für Spektralbereiche des sichtbaren Lichts mit einer geringen Absorption durchstrahlbar ist, und umfassend wenigstens eine auf dem Grundkörper aufgebrachte farbgebende Beschichtung, wobei die farbgebende Beschichtung vorzugsweise durch eine Lackschicht oder eine Lackfolie gebildet ist, wobei die farbgebende Beschichtung die Spektralbereiche des sichtbaren Lichts weitestgehend absorbiert und, wobei zur Durchleuchtung des Grundkörpers die farbgebende Beschichtung bereichsweise eine Vielzahl von punktförmigen Perforationen aufweist, die die farbgebende Beschichtung vollständig durchdringen und, wobei über der perforierten farbgebenden Beschichtung eine die farbgebende Beschichtung und die Perforationen versiegelnde Klarlackschicht, welche für Spektralbereiche des sichtbaren Lichts mit einer geringen Absorption durchstrahlbar ist, aufgebracht ist.

Ein entsprechendes Verkleidungsteil für ein Kraftfahrzeug kann der DE 10 2010 032 190 B4 entnommen werden.

Hauptproblematik bei der Herstellung von diesen gattungsgemäßen durchleuchtbaren Verkleidungsteilen ist der Zielkonflikt zum einen die Größe der Perforationen so zu wählen, dass diese zumindest auf eine größere Entfernung mit dem bloßen Auge nicht erkennbar sind. Und zum anderen die Größe und Verteilung der Perforationen nicht so klein werden zu lassen, dass der die Klarlackschicht bildende Klarlack die Perforationen nicht zu füllen vermag. Bei einer unzureichenden Füllung der Perforationen mit dem Klarlack der Klarlackschicht kommt es zu Einfallstellen im Bereich der Perforationen, die sich sowohl auf das optische Erscheinungsbild als auch auf die Durchstrahlbarkeit des Verkleidungsteils negativ auswirken.

Die Erfindung stellt sich daher die Aufgabe ein Verkleidungsteil mit den eingangs beschriebenen Merkmalen anzugeben, das gegenüber dem Stand der Technik mit dem bloßen Auge schwer erkennbare Perforationen bei gleichzeitig gleichmäßiger Ausbildung der Klarlackschicht aufweist.

Erfindungsgemäß wird diese Aufgabe gelöst durch ein durchleuchtbares Verkleidungsteil für ein Kraftfahrzeug umfassend:
- einen Grundkörper aus einem transluzenten oder transparenten Polymermaterial, welches für Spektralbereiche des sichtbaren Lichts mit einer geringen Absorption durchstrahlbar ist, und
- wenigstens eine auf dem Grundkörper aufgebrachte farbgebende Beschichtung,
wobei die farbgebende Beschichtung vorzugsweise durch eine Lackschicht oder eine Lackfolie gebildet ist, wobei die farbgebende Beschichtung die Spektralbereiche des sichtbaren Lichts weitestgehend absorbiert, und wobei zur Durchleuchtung des Grundkörpers die farbgebende Beschichtung bereichsweise eine Vielzahl von punktförmigen Perforationen aufweist, die die farbgebende Beschichtung vollständig durchdringen, und wobei über der perforierten farbgebenden Beschichtung eine die farbgebende Beschichtung und die Perforationen versiegelnde Klarlackschicht, welche für Spektralbereiche des sichtbaren Lichts mit einer geringen Absorption durchstrahlbar ist, aufgebracht ist, wobei erfindungsgemäß der Durchmesser D der Perforationen in einem Bereich von 50 µm bis 175 µm liegt und, wobei der Abstand A zwischen den Mittelpunkten M zueinander benachbarter Perforationen in einem Bereich zwischen dem 1,0-fachen bis 5,0-fachen, bevorzugt in einem Bereich zwischen dem 1,5-fachen bis 4,0-fachen des Durchmessers D der benachbarten Perforationen liegt, sodass die Klarlackschicht ergänzend auch die Perforationen ausfüllt.

Es hat sich gezeigt, dass der erfindungsgemäße Durchmesserbereich der Perforationen von 50 µm bis 175 µm in Kombination mit einem Abstand A zwischen den Mittelpunkten M zueinander benachbarter Perforationen in einem Bereich zwischen dem 1,0-fachen bis 5,0-fachen, bevorzugt in einem Bereich zwischen dem 1,5-fachen bis 4,0-fachen des Durchmessers D der benachbarten Perforationen ein Optimum zwischen einer geringen Erkennbarkeit der Perforationen mit dem bloßen Auge und einer guten Benetzung und Füllung der Perforationen mit der Klarlackschicht darstellt.

Zwischen dem Grundkörper und der farbgebenden Beschichtung kann zusätzlich eine Haftvermittlerschicht oder können zusätzlich Haftvermittlerschichten angeordnet sein. Hierbei kann die Vielzahl von punktförmigen Perforationen auch die Haftvermittlerschicht oder die Haftvermittlerschichten vollständig durchdringen.

Das transluzente oder transparente Polymermaterial des Grundkörpers kann bevorzugt Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthalten oder hieraus gebildet sein.

Das transluzente oder transparente Polymermaterial des Grundkörpers kann zusätzlich einen Füllstoff aufweisen. Der Füllstoff kann Wollastonit und/oder amorphes Siliziumdioxid und/oder Cristobalit und/oder Feldspat und/oder Quarzgut und/oder Glas und/oder Glasfasern umfassen.

Der Füllstoff kann bevorzugt faserförmig und/oder nadelförmig sein.

Insbesondere faserförmiges und/oder nadelförmiges Wollastonit hat sich als bevorzugt geeignet erwiesen.

Bevorzugt beträgt der Gehalt an Talkum und/oder Kohlenstoff und/oder Titandioxid in dem Füllstoff allein oder in Summe weniger als 10 Vol.%, bevorzugt weniger als 5 Vol.%, weiter bevorzugt weniger als 2 Vol.%, noch weiter bevorzugt weniger als 1 Vol.%.

Der Füllstoffgehalt des Füllstoffs in dem transluzenten oder transparenten Polymermaterial des Grundkörpers weißt bevorzugt einen Wert von 10 Vol.% bis 30 Vol.%, weiter bevorzugt von 15 Vol.% bis 20 Vol.% auf. Vorstehende Wertebereiche stellen das Optimum zwischen geringe Absorption für Spektralbereiche des sichtbaren Lichts und gleichzeitig ausreichend geringer Wärmeausdehnung und hoher Schlagzähigkeit dar.

Das transluzente oder transparente Polymermaterial des Grundkörpers ist bevorzugt ein für wenigstens eine Laserwellenlänge transparentes Material. Dies bedeutet insbesondere, dass das Polymermaterial so gewählt ist, dass es von wenigstens einem herkömmlichen in der Lasermaterialbearbeitung eingesetzten Lasersystem bzw. dessen verwendeter Laserwellenlänge durchstrahlbar ist, also die Energie der Laserstrahlung nicht signifikant in das Polymermaterial eingebracht oder eingekoppelt wird.

Für den Fall, dass die farbgebende Beschichtung durch eine Lackfolie gebildet ist, kann diese Lackfolie mehrschichtig aufgebaut sein. Hierbei kann die Lackfolie wenigstens eine Trägerfolie, bevorzugt aus einem transluzenten oder transparenten Material, welches für Spektralbereiche des sichtbaren Lichts mit einer geringen Absorption durchstrahlbar ist, und wenigsten eine auf der Trägerfolie angeordnete farbgebende Lackschicht umfassen. Die Lackschicht auf der Trägerfolie kann eine Dicke im Bereich von 5 µm bis 100 µm, bevorzugt im Bereich von 10 µm bis 60 µm aufweisen. Die Trägerfolie selbst kann eine Dicke im Bereich von 50 µm bis 1000 µm, bevorzugt im Bereich von 150 µm bis 600 µm aufweisen.

Die Perforationen können regelmäßig und/oder versetzt zueinander angeordnet sein. Es ist jedoch auch denkbar, dass die Perforationen untereinander keinen einheiltich gleichen Abstand aufweisen. Erfindungsgemäß müssen die Abstände der Perforationen nur innerhalb des vorstehend angegebenen Bereichs liegen, damit eine Ausfüllung der Perforationen zuverlässig gewährleistet ist.

Zusätzlich kann eine Maskierungsschicht vorgesehen sein. Die Maskierungsschicht kann insbesondere zwischen dem Grundkörper und der farbgebenden Beschichtung und/oder auf der Rückseite des Grundkörpers angeordnet sein kann. Bei der Verwendung einer Lackfolie als farbgebender Beschichtung kann die Maskierungsschicht insbesondere auf der der Sichtseite der Folie gegenüberliegenden Rückseite der Lackfolie angeordnet sein. Die Maskierungsschicht weist im Bereich der Perforationen lokal Bereiche auf, die für Spektralbereiche des sichtbaren Lichts mit einer geringen Absorption durchstrahlbar ist. Diese Bereiche können insbesondere durch Ausnehmungen in der Maskierungsschicht gebildet sein. Die Maskierungsschicht ist ansonsten selbstredend für den Spektralbereich des sichtbaren Lichts weitestgehend intransparent und/oder undurchlässig. Die Maskierungsschicht kann insbesondere als Folie, als Schicht einer Folie oder im Siebdruckverfahren, einem Tampondruckverfahren, einem herkömmlichen Streich- Tauch, oder Sprühlackierverfahren oder mit einem Tintenstrahldruckverfahren aufgebracht sein.

Der Grundkörper weist bevorzugt eine Wandstärke im Bereich von 0,8 mm bis 4,5 mm auf.

Auf der Klarlackschicht kann eine zusätzliche Schutzschicht vorgesehen sein, wobei die zusätzliche Schutzschicht insbesondere ein Silan oder eine Silanverbindung umfassen kann.

Unter einer farbgebenden Beschichtung wird vorliegend auch eine den Farbton weiß oder den Farbton schwarz hervorrufende Beschichtung verstanden.

Die farbgebende Beschichtung muss nicht zwingend aus einer einzelnen Schicht bestehen, sondern kann in sich aus mehreren Schichten gebildet sein. Insbesondere bei einer Lackschicht als farbgebende Beschichtung muss die Lackschicht nicht zwingend aus einer einzelnen Schicht bestehen, sondern kann in sich aus mehreren Schichten gebildet sein.

Das Verkleidungsteil ist bevorzugt eine Stoßfängerverkleidung oder eine Heckklappenverkleidung oder eine Säulenverkleidung oder eine Türverkleidung oder eine Kotflügelverkleidung oder eine Dachverkleidung oder ein Spoiler eines Kraftfahrzeuges, oder ist ein Bauteil oder eine Baugruppe oder ein Bestandteil der vorgenannten Teile.

Teil der Erfindung ist ferner ein System aus einem durchleuchtbaren Verkleidungsteil wie vorstehend beschrieben oder nach einem der Ansprüche 1 bis 5 und einem hinter der bestimmungsgemäßen Sichtseite des Grundkörpers angeordneten Leuchtelement. Der bestimmungsgemäßen Sichtseite des Grundkörpers entspricht bei dem System diejenige Seite des Grundkörpers auf welcher die farbgebende Beschichtung und die Klarlacksicht aufgebracht sind.

Das Leuchtelement weist bevorzugt eine Mindestleuchtstärke von 500 cd/m² auf.

Ein Verfahren zur Herstellung eines durchleuchtbaren Verkleidungsteils nach einem der Ansprüche 1 bis 5, umfasst die folgenden Schritte:
- Bereitstellen eines Grundkörpers aus einem transluzenten oder transparenten Polymermaterial, welches für Spektralbereiche des sichtbaren Lichts mit einer geringen Absorption durchstrahlbar ist, und
- Aufbringen wenigstens einer farbgebenden Beschichtung auf dem Grundkörper, wobei die farbgebende Beschichtung vorzugsweise durch eine Lackschicht oder eine Lackfolie gebildet ist, wobei die farbgebende Beschichtung die Spektralbereiche des sichtbaren Lichts weitestgehend absorbiert,
- Einbringen einer Vielzahl von punktförmigen Perforationen in die farbgebende Beschichtung, die die farbgebende Beschichtung vollständig durchdringen um eine Durchleuchtung des Grundkörpers zu ermöglichen,
- Aufbringen einer die farbgebende Beschichtung und die eingebrachten Perforationen versiegelnden Klarlackschicht über der perforierten farbgebenden Beschichtung, wobei die Klarlackschicht für Spektralbereiche des sichtbaren Lichts mit einer geringen Absorption durchstrahlbar ist,
wobei beim Einbringen der punktförmigen Perforationen der Durchmesser D der Perforationen so gewählt wird, dass dieser in einem Bereich von 50 µm bis 175 µm liegt und, wobei der Abstand A zwischen den Mittelpunkten M zueinander benachbarter Perforationen so gewählt wird, dass dieser Abstand A in einem Bereich zwischen dem 1,0-fachen bis 5,0 fachen, bevorzugt in einem Bereich zwischen dem 1,5-fachen bis 4,0-fachen des Durchmessers D der benachbarten Perforationen liegt, sodass beim Aufbringen der Klarlackschicht zusätzlich die Perforationen ausgefüllt werden.

Vorliegend werden unter punktförmigen Perforationen neben kreisförmigen Geometrien auch von einer reinen Kreisform abweichende Geometrien verstanden.

Der Schritt des Einbringens der punktförmigen Perforationen kann mittels eines Laserstrahls oder mittels mehrerer Laserstrahlen erfolgen.

Der Schritt des Bereitstellens des Grundkörpers kann ein Spritzgussverfahren oder ein Thermoformungsverfahren umfassen.

Im Folgenden wird die Erfindung anhand lediglich Ausführungsbeispiele darstellender Zeichnungen erläutert. Es zeigen schematisch:
- Fig. 1: eine schematische Darstellung der Teil-Außenansicht eines an einem Kraftfahrzeug montierten erfindungsgemäßen Verkleidungsteils;
- Fig. 2: eine schematische Draufsicht auf die Sichtseite des Schichtaufbaus eines erfindungsgemäßen durchleuchtbaren Verkleidungsteils;
- Fig. 3-4: Schnittdarstellungen durch ein erfindungsgemäßes System;
- Fig. 5: eine weitere schematische Draufsicht auf die Sichtseite des Schichtaufbaus eines erfindungsgemäßen durchleuchtbaren Verkleidungsteils.

In den Figuren werden gleiche oder funktionsgleiche Elemente mit den gleichen Bezugszeichen versehen.

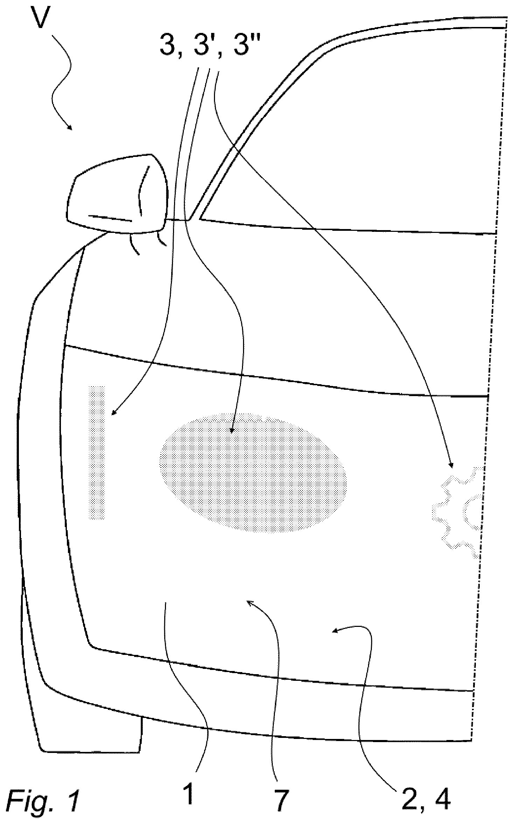

Die Fig. 1 zeigt eine Teil-Außenansicht der Sichtseite 7 eines Kraftfahrzeugs V mit einem erfindungsgemäßen durchleuchtbaren Verkleidungsteil für das Kraftfahrzeug V umfassend:
- einen Grundkörper 1 aus einem transluzenten oder transparenten Polymermaterial, welches für Spektralbereiche des sichtbaren Lichts mit einer geringen Absorption durchstrahlbar ist, und
- wenigstens eine auf dem Grundkörper 1 aufgebrachte farbgebende Beschichtung 2,
wobei die farbgebende Beschichtung 2 vorzugsweise durch eine Lackschicht oder eine Lackfolie gebildet ist, wobei die farbgebende Beschichtung 2 die Spektralbereiche des sichtbaren Lichts weitestgehend absorbiert.

Zur Durchleuchtung des Grundkörpers 1 weist die farbgebende Beschichtung 2 bereichsweise eine Vielzahl von punktförmigen Perforationen 3, 3', 3" auf, die die farbgebende Beschichtung 2 vollständig durchdringen. Über der perforierten farbgebenden Beschichtung 2 ist eine die farbgebende Beschichtung 2 und die Perforationen 3, 3', 3" versiegelnde Klarlackschicht 4, welche für Spektralbereiche des sichtbaren Lichts mit einer geringen Absorption durchstrahlbar ist, aufgebracht. Die punktförmigen Perforationen 3, 3', 3" ermöglichen es, dass das Verkleidungsteil bzw. der Grundkörper 1 des Verkleidungsteils durchleuchtbar ist und so Bereiche des Verkleidungsteils eine optische oder eine Signalfunktion übernehmen können. Als Beispiele angedeutet sind hier ein Seitenblinker oder eine Seitenmarkierungsleuchte, ein Tagfahrlicht oder Frontscheinwerfer und ein Markenemblem des Herstellers des Kraftfahrzeuges V.

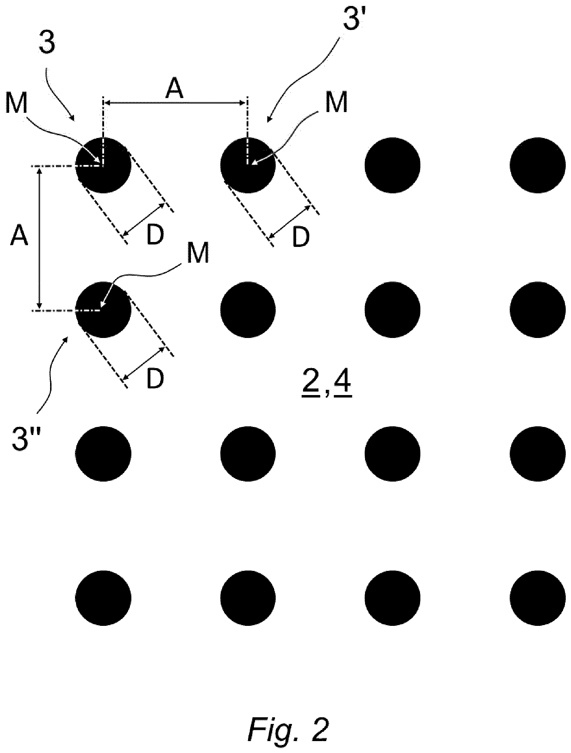

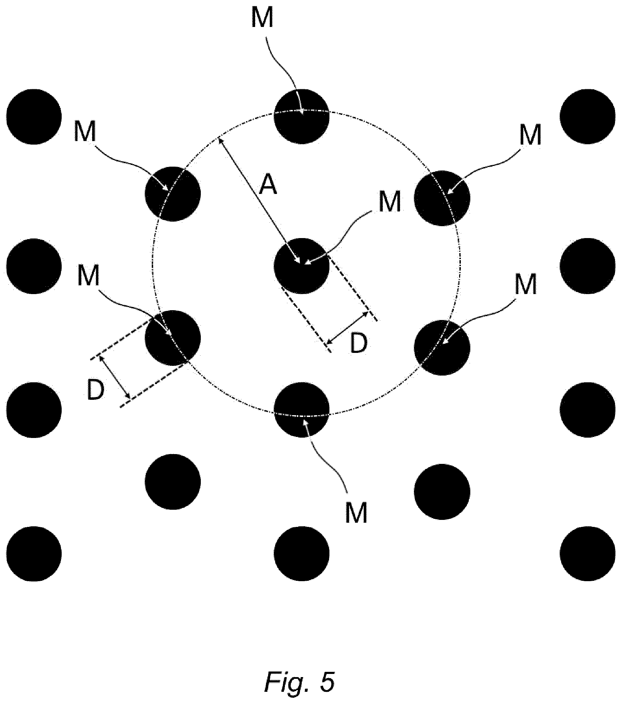

In Fig. 2 und in Fig. 5 sind jeweils in vergrößerten Draufsichten auf die Sichtseite 7 eines Verkleidungteils dargestellt, dass erfindungsgemäß der Durchmesser D der Perforationen 3, 3', 3" des vorstehend in Fig. 1 beschriebenen Verkleidungsteils in einem Bereich von 50 µm bis 175 µm liegt und hierbei der Abstand A zwischen den Mittelpunkten M zueinander benachbarter Perforationen 3, 3', 3" in einem Bereich zwischen dem 1,0-fachen bis 5,0-fachen, bevorzugt in einem Bereich zwischen dem 1,5-fachen bis 4,0-fachen des Durchmessers D der benachbarten Perforationen 3, 3', 3" liegt, sodass die Klarlackschicht 4 zusätzlich die Perforationen 3, 3', 3" ausfüllt. In Fig. 5 sind die Perforationen 3, 3', 3" im Vergleich zu den Perforationen 3, 3', 3" in Fig. 2 ebenfalls gleichmäßig, jedoch zueinander versetzt angeordnet. Eine derartige versetzte Anordnung liefert in einigen Anwendungsfällen einen weiter verbesserten optischen Eindruck, wenn sichtbares Licht das Verkleidungsteil durchdringt.

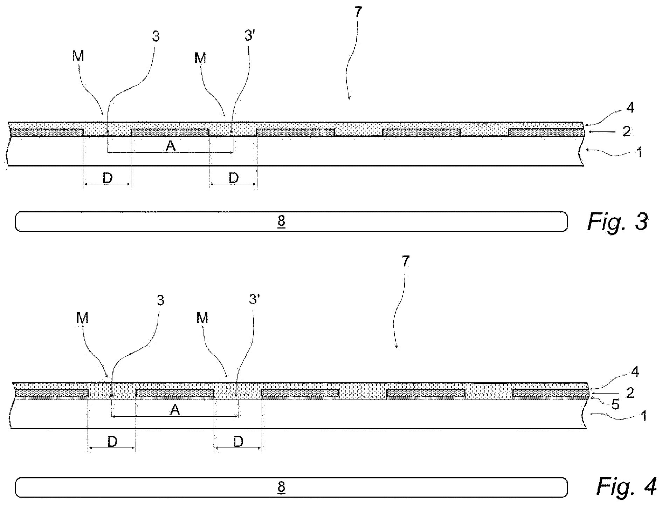

In den Fig. 3 und Fig. 4 ist der Aufbau des erfindungsgemäßen Verkleidungsteils bzw. eines erfindungsgemäßen Systems dargestellt.

Das durchleuchtbare Verkleidungsteil für ein Kraftfahrzeug umfasst:
- einen Grundkörper 1 aus einem transluzenten oder transparenten Polymermaterial, welches für Spektralbereiche des sichtbaren Lichts mit einer geringen Absorption durchstrahlbar ist, und
- wenigstens eine auf dem Grundkörper 1 aufgebrachte farbgebende Beschichtung 2,
wobei die farbgebende Beschichtung 2 vorzugsweise durch eine Lackschicht oder eine Lackfolie gebildet ist, wobei die farbgebende Beschichtung 2 die Spektralbereiche des sichtbaren Lichts weitestgehend absorbiert. Zur Durchleuchtung des Grundkörpers 1 weist die farbgebende Beschichtung 2 bereichsweise eine Vielzahl von punktförmigen Perforationen 3, 3', 3" auf, die die farbgebende Beschichtung 2 vollständig durchdringen. Über der perforierten farbgebenden Beschichtung 2 ist eine die farbgebende Beschichtung 2 und die Perforationen 3, 3', 3" versiegelnde Klarlackschicht 4, welche für Spektralbereiche des sichtbaren Lichts mit einer geringen Absorption durchstrahlbar ist, aufgebracht.

Der Durchmesser D der Perforationen 3, 3', 3" liegt in einem Bereich von 50 µm bis 175 µm und der Abstand A zwischen den Mittelpunkten M zueinander benachbarter Perforationen 3, 3', 3" liegt in einem Bereich zwischen dem 1,0-fachen bis 5,0-fachen, bevorzugt in einem Bereich zwischen dem 1,5-fachen bis 4,0-fachen des Durchmessers D der benachbarten Perforationen 3, 3', 3", sodass die Klarlackschicht 4 zusätzlich die Perforationen 3, 3', 3" ausfüllt.

Bei dem gezeigten erfindungsgemäßen System ist hinter der bestimmungsgemäßen Sichtseite 7 des Grundkörpers 1 ein Leuchtelement 8 angeordnet, wobei das Leuchtelement vorzugsweise ein Leuchtelement 8 mit einer Mindestleuchtstärke von 500 cd/m² ist.

Im Unterschied zu Fig. 3 ist oder sind bei dem in Fig. 4 dargestellten Verkleidungsteil bzw. System zwischen dem Grundkörper 1 und der farbgebenden Beschichtung 2 zusätzlich eine Haftvermittlerschicht 5 oder Haftvermittlerschichten angeordnet. Die Vielzahl von punktförmigen Perforationen 3, 3', 3" durchdringen auch die Haftvermittlerschicht 5 oder die Haftvermittlerschichten vollständig.

Für alle vorstehend beschriebenen Ausführungsbeispiele in den Fig. 1 bis 4 gilt gleichermaßen, dass das transluzente oder transparente Polymermaterial des Grundkörpers 1 Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthält oder hieraus gebildet sein kann.

Das transluzente oder transparente Polymermaterial des Grundkörpers 1 kann ein für wenigstens eine Laserwellenlänge transparentes Material sein.

Der Grundkörper 1 weist bevorzugt eine Wandstärke im Bereich von 0,8 mm bis 4,5 mm auf.

Das Verkleidungsteil kann neben einer in Fig. 1 gezeigten Stoßfängerverkleidung auch eine Heckklappenverkleidung oder eine Säulenverkleidung oder eine Türverkleidung oder eine Kotflügelverkleidung oder eine Dachverkleidung oder ein Spoiler eines Kraftfahrzeuges, oder ein Bauteil oder eine Baugruppe oder ein Bestandteil der vorgenannten Teile sein.

Ein Verfahren zur Herstellung eines durchleuchtbaren Verkleidungsteils gemäß den vorstehenden Ausführungsbeispielen, oder gemäß einem der Ansprüche 1 bis 6 kann wie folgt charakterisiert sein.

Verfahren zur Herstellung eines durchleuchtbaren Verkleidungsteils umfassend die folgenden Schritte:
- Bereitstellen eines Grundkörpers 1 aus einem transluzenten oder transparenten Polymermaterial, welches für Spektralbereiche des sichtbaren Lichts mit einer geringen Absorption durchstrahlbar ist, und
- Aufbringen wenigstens einer farbgebenden Beschichtung 2 auf dem Grundkörper 1, wobei die farbgebende Beschichtung 2 vorzugsweise durch eine Lackschicht oder eine Lackfolie gebildet ist, wobei die farbgebende Beschichtung 2 die Spektralbereiche des sichtbaren Lichts weitestgehend absorbiert,
- Einbringen einer Vielzahl von punktförmigen Perforationen 3, 3', 3" in die farbgebende Beschichtung 2, die die farbgebende Beschichtung 2 vollständig durchdringen um eine Durchleuchtung des Grundkörpers 1 zu ermöglichen,
- Aufbringen einer die farbgebende Beschichtung 2 und die eingebrachten Perforationen 3, 3', 3" versiegelnden Klarlackschicht 4 über der perforierten farbgebenden Beschichtung 2, wobei die Klarlackschicht 4 für Spektralbereiche des sichtbaren Lichts mit einer geringen Absorption durchstrahlbar ist,
wobei beim Einbringen der punktförmigen Perforationen 3, 3', 3" der Durchmesser D der Perforationen 3, 3', 3" so gewählt wird, dass dieser in einem Bereich von 50 µm bis 175 µm liegt und, wobei der Abstand A zwischen den Mittelpunkten M zueinander benachbarter Perforationen 3, 3', 3" so gewählt wird, dass dieser Abstand A in einem Bereich zwischen dem 1,0-fachen bis 5,0 fachen, bevorzugt in einem Bereich zwischen dem 1,5-fachen bis 4,0-fachen des Durchmessers D der benachbarten Perforationen 3, 3', 3" liegt, sodass beim Aufbringen der Klarlackschicht 4 zusätzlich die Perforationen 3, 3', 3" ausgefüllt werden.

Der Schritt des Einbringens der punktförmigen Perforationen 3, 3', 3" kann mittels eines Laserstrahls oder mittels mehrerer Laserstrahlen erfolgen.

Der Schritt des Bereitstellens des Grundkörpers 1 kann ein Spritzgussverfahren oder ein Thermoformungsverfahren umfassen.

## Patentansprüche

1. Durchleuchtbares Verkleidungsteil für ein Kraftfahrzeug (V) umfassend:
- einen Grundkörper (1) aus einem transluzenten oder transparenten Polymermaterial, welches für Spektralbereiche des sichtbaren Lichts mit einer geringen Absorption durchstrahlbar ist, und
- wenigstens eine auf dem Grundkörper (1) aufgebrachte farbgebende Beschichtung (2),
wobei die farbgebende Beschichtung (2) vorzugsweise durch eine Lackschicht oder eine Lackfolie gebildet ist, wobei die farbgebende Beschichtung (2) die Spektralbereiche des sichtbaren Lichts weitestgehend absorbiert und,
wobei zur Durchleuchtung des Grundkörpers (1) die farbgebende Beschichtung (2) bereichsweise eine Vielzahl von punktförmigen Perforationen (3, 3', 3") aufweist, die die farbgebende Beschichtung (2) vollständig durchdringen und,
wobei über der perforierten farbgebenden Beschichtung (2) eine die farbgebende Beschichtung (2) und die Perforationen (3, 3', 3") versiegelnde Klarlackschicht (4), welche für Spektralbereiche des sichtbaren Lichts mit einer geringen Absorption durchstrahlbar ist, aufgebracht ist,
**dadurch gekennzeichnet, dass**
das Verkleidungsteil eine Stoßfängerverkleidung oder ein Spoiler eines Kraftfahrzeuges, oder ein Bauteil oder eine Baugruppe oder ein Bestandteil einer Stoßfängerverkleidung oder eines Spoiler eines Kraftfahrzeuges ist und, dass
der Durchmesser D der Perforationen (3, 3', 3") in einem Bereich von 50 µm bis 175 µm liegt und,
dass der Abstand A zwischen den Mittelpunkten M zueinander benachbarter Perforationen (3, 3', 3") in einem Bereich zwischen dem 1,0-fachen bis 5,0-fachen, bevorzugt in einem Bereich zwischen dem 1,5-fachen bis 4,0-fachen des Durchmessers D der benachbarten Perforationen (3, 3', 3") liegt,
sodass die Klarlackschicht (4) ergänzend auch die Perforationen (3, 3', 3") ausfüllt.

2. Durchleuchtbares Verkleidungsteil nach Anspruch 1, **dadurch gekennzeichnet, dass** zwischen dem Grundkörper (1) und der farbgebenden Beschichtung (2) zusätzlich eine Haftvermittlerschicht (5) oder Haftvermittlerschichten angeordnet ist oder sind, wobei vorzugsweise die Vielzahl von punktförmigen Perforationen (3, 3', 3") auch die Haftvermittlerschicht (5) oder die Haftvermittlerschichten vollständig durchdringen.

3. Durchleuchtbares Verkleidungsteil nach einem der vorstehenden Ansprüche 1 oder 2, **dadurch gekennzeichnet, dass** das transluzente oder transparente Polymermaterial des Grundkörpers (1) Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthält oder hieraus gebildet ist.

4. Durchleuchtbares Verkleidungsteil nach einem der vorstehenden Ansprüche, **dadurch gekennzeichnet, dass** das transluzente oder transparente Polymermaterial des Grundkörpers (1) ein für wenigstens eine Laserwellenlänge transparentes Material ist.

5. Durchleuchtbares Verkleidungsteil nach einem der vorstehenden Ansprüche, **dadurch gekennzeichnet, dass** der Grundkörper (1) eine Wandstärke im Bereich von 0,8 mm bis 4,5 mm aufweist.

6. System aus einem durchleuchtbaren Verkleidungsteil nach einem der vorstehenden Ansprüche und einem hinter der bestimmungsgemäßen Sichtseite (7) des Grundkörpers (1) angeordneten Leuchtelement (8), wobei das Leuchtelement vorzugsweise ein Leuchtelement (8) mit einer Mindestleuchtstärke von 500 cd/m² ist.

7. Verfahren zur Herstellung eines durchleuchtbaren Verkleidungsteils nach einem der vorstehenden Ansprüche 1 bis 5, umfassend die folgenden Schritte:
- Bereitstellen eines Grundkörpers (1) aus einem transluzenten oder transparenten Polymermaterial, welches für Spektralbereiche des sichtbaren Lichts mit einer geringen Absorption durchstrahlbar ist, und
- Aufbringen wenigstens einer farbgebenden Beschichtung (2) auf dem Grundkörper (1), wobei die farbgebende Beschichtung (2) vorzugsweise durch eine Lackschicht oder eine Lackfolie gebildet ist, wobei die farbgebende Beschichtung (2) die Spektralbereiche des sichtbaren Lichts weitestgehend absorbiert,
- Einbringen einer Vielzahl von punktförmigen Perforationen (3, 3', 3") in die farbgebende Beschichtung (2), die die farbgebende Beschichtung (2) vollständig durchdringen um eine Durchleuchtung des Grundkörpers (1) zu ermöglichen,
- Aufbringen einer die farbgebende Beschichtung (2) und die eingebrachten Perforationen (3, 3', 3") versiegelnden Klarlackschicht (4) über der perforierten farbgebenden Beschichtung (2), wobei die Klarlackschicht (4) für Spektralbereiche des sichtbaren Lichts mit einer geringen Absorption durchstrahlbar ist,
**dadurch gekennzeichnet, dass**
beim Einbringen der punktförmigen Perforationen (3, 3', 3") der Durchmesser D der Perforationen (3, 3', 3") so gewählt wird, dass dieser in einem Bereich von 50 µm bis 175 µm liegt und,
dass der Abstand A zwischen den Mittelpunkten M zueinander benachbarter Perforationen (3, 3', 3") so gewählt wird, dass dieser Abstand A in einem Bereich zwischen dem 1,0-fachen bis 5,0-fachen des Durchmessers D der benachbarten Perforationen (3, 3', 3") liegt, sodass beim Aufbringen der Klarlackschicht (4) ergänzend auch die Perforationen (3, 3', 3") ausgefüllt werden.

8. Verfahren zur Herstellung eines durchleuchtbaren Verkleidungsteils nach Anspruch 7, **dadurch gekennzeichnet, dass** der Schritt des Einbringens der punktförmigen Perforationen (3, 3', 3") mittels eines Laserstrahls oder mittels mehrerer Laserstrahlen erfolgt.

9. Verfahren zur Herstellung eines durchleuchtbaren Verkleidungsteils nach Anspruch 7 oder 8, **dadurch gekennzeichnet, dass** der Schritt des Bereitstellens des Grundkörpers (1) ein Spritzgussverfahren oder ein Thermoformungsverfahren umfasst.

## Claims

1. A translucent trim component for a motor vehicle (V) comprising:
- a base body (1) made of a translucent or transparent polymer material that is radiolucent in the spectral ranges of visible light with low absorption, and
- at least one color-imparting coating (2) applied to the base body (1),
wherein the color-imparting coating (2) is preferably formed by a paint layer or a paint film, wherein the color-imparting coating (2) absorbs the spectral ranges of visible light to the greatest extent possible and,
wherein, for the purpose of allowing light to pass through the base body (1), the coloring coating (2) has, in certain areas, a plurality of punctiform perforations (3, 3', 3") that completely penetrate the coloring coating (2) and,
wherein a clear coat layer (4) sealing the coloring coating (2) and the perforations (3, 3', 3") is applied over the perforated coloring coating (2), which clear lacquer layer (4) is transparent to spectral regions of visible light with low absorption,
**characterized in that**
the trim part is a bumper trim or a spoiler of a motor vehicle, or a component or an assembly or a part of a bumper trim or a spoiler of a motor vehicle, and that the diameter D of the perforations (3, 3', 3") lies in a range from 50 µm to 175 µm and,
that the distance A between the centers M of adjacent perforations (3, 3', 3") lies in a range between 1.0 times and 5.0 times, preferably in a range between 1.5 times and 4.0 times, the diameter D of the adjacent perforations (3, 3', 3"),
so that the clear coat layer (4) additionally fills the perforations (3, 3', 3").

2. Translucent trim part according to claim 1, **characterized in that** additionally an adhesive layer (5) or adhesive layers is or are arranged between the base body (1) and the coloring coating (2), wherein preferably the plurality of punctiform perforations (3, 3', 3") also completely penetrate the adhesive layer (5) or the adhesive layers.

3. Translucent trim part according to any one of the preceding claims 1 or 2, **characterized in that** the translucent or transparent polymer material of the base body (1) contains polypropylene and/or polycarbonate and/or polyethylene terephthalate and/or polycarbonate and/or acrylonitrile-butadiene-styrene and/or polymethyl methacrylate and/or polyamide, or is formed therefrom.

4. Translucent trim part according to any one of the preceding claims, **characterized in that** the translucent or transparent polymer material of the base body (1) is a material transparent to at least one laser wavelength.

5. Translucent trim part according to any one of the preceding claims, **characterized in that** the base body (1) has a wall thickness in the range of 0.8 mm to 4.5 mm.

6. A system comprising a translucent trim part according to any one of the preceding claims and a light-emitting element (8) arranged behind the intended viewing side (7) of the base body (1), wherein the light-emitting element is preferably a light-emitting element (8) with a minimum luminance of 500 cd/m².

7. A method for manufacturing a translucent trim part according to any one of the preceding claims 1 through 5, comprising the following steps:
- providing a base body (1) made of a translucent or transparent polymer material that is radiolucent for spectral regions of visible light with low absorption, and
- applying at least one coloring coating (2) to the base body (1), wherein the coloring coating (2) is preferably formed by a paint layer or a paint film, wherein the coloring coating (2) absorbs the spectral ranges of visible light to the greatest extent possible,
- Creating a plurality of punctiform perforations (3, 3', 3") in the coloring coating (2), which penetrate the coloring coating (2) completely to allow light to pass through the base body (1),
- Applying a clear coat layer (4) over the perforated coloring coating (2) to seal the coloring coating (2) and the created perforations (3, 3', 3"), wherein the clear coat layer (4) is transparent to spectral regions of visible light with low absorption,
**characterized in that**
when creating the punctiform perforations (3, 3', 3"), the diameter D of the perforations (3, 3', 3") is selected such that it lies in a range from 50 µm to 175 µm, and,
that the distance A between the centers M of adjacent perforations (3, 3', 3") is selected such that this distance A lies in a range between 1.0 times and 5.0 times the diameter D of the adjacent perforations (3, 3', 3"), so that when the clear coat layer (4) is applied, the perforations (3, 3', 3") are also filled.

8. Method for manufacturing a translucent trim part according to claim 7, **characterized in that** the step of creating the punctiform perforations (3, 3', 3") is performed using a laser beam or multiple laser beams.

9. Method for manufacturing a translucent trim part according to claim 7 or 8, **characterized in that** the step of providing the base body (1) comprises an injection molding process or a thermoforming process.

## Revendications

1. Pièce d'habillage transparente pour un véhicule automobile (V), comprenant :
- un corps de base (1) en un matériau polymère translucide ou transparent, pouvant être traversé par un rayonnement avec une faible absorption pour des plages spectrales de la lumière visible, et
- au moins un revêtement colorant (2) appliqué sur le corps de base (1),
dans laquelle le revêtement colorant (2) est formé de manière préférée par une couche de peinture ou un film de peinture, dans laquelle le revêtement colorant (2) absorbe autant que possible les plages spectrales de la lumière visible, et
dans laquelle, en vue d'une transparence du corps de base (1), le revêtement colorant (2) présente par régions une pluralité de perforations (3, 3', 3") ponctuelles qui pénètrent complètement dans le revêtement colorant (2), et
dans laquelle une couche de vernis transparent (4), qui scelle le revêtement colorant (2) et les perforations (3, 3', 3") et qui peut être traversée par un rayonnement avec une faible absorption pour des plages spectrales de la lumière visible, est appliquée sur le revêtement colorant (2) perforé,
**caractérisée en ce que**
la pièce d'habillage est un carénage de pare-chocs ou un spoiler d'un véhicule automobile, ou un composant ou un assemblage ou un élément d'un carénage de pare-chocs ou d'un spoiler d'un véhicule automobile, et **en ce que**
le diamètre D des perforations (3, 3', 3") se situe dans une plage comprise entre 50 µm et 175 µm, et **en ce que**
la distance A entre les centres M de perforations (3, 3', 3") adjacentes se situe dans une plage comprise entre 1,0 et 5,0 fois, de manière préférée dans une plage comprise entre 1,5 et 4,0 fois le diamètre D des perforations (3, 3', 3") adjacentes,
de sorte que la couche de vernis transparent (4) remplit également les perforations (3, 3', 3").

2. Pièce d'habillage transparente selon la revendication 1, **caractérisée en ce qu'**une couche de promoteur d'adhérence (5) ou des couches de promoteur d'adhérence est ou sont agencée(s) de manière supplémentaire entre le corps de base (1) et le revêtement colorant (2), dans laquelle la pluralité de perforations (3, 3', 3") ponctuelles pénètrent de manière préférée également complètement dans la couche de promoteur d'adhérence (5) ou dans les couches de promoteur d'adhérence.

3. Pièce d'habillage transparente selon l'une quelconque des revendications 1 ou 2, **caractérisée en ce que** le matériau polymère translucide ou transparent du corps de base (1) contient ou est réalisé à partir de polypropylène et/ou de polycarbonate et/ou de poly(téréphtalate d'éthylène) et/ou de polycarbonate et/ou d'acrylonitrile-butadiène-styrène et/ou de poly(méthacrylate de méthyle) et/ou de polyamide.

4. Pièce d'habillage transparente selon l'une quelconque des revendications précédentes, **caractérisée en ce que** le matériau polymère translucide ou transparent du corps de base (1) est un matériau transparent pour au moins une longueur d'onde laser.

5. Pièce d'habillage transparente selon l'une quelconque des revendications précédentes, **caractérisée en ce que** le corps de base (1) présente une épaisseur de paroi située dans la plage comprise entre 0,8 mm et 4,5 mm.

6. Système constitué d'une pièce d'habillage transparente selon l'une quelconque des revendications précédentes et d'un élément lumineux (8) agencé derrière le côté de visualisation (7) prévu du corps de base (1), dans lequel l'élément lumineux est de manière préférée un élément lumineux (8) présentant une intensité lumineuse minimale de 500 cd/m².

7. Procédé de fabrication d'une pièce d'habillage transparente selon l'une quelconque des revendications 1 à 5 ci-dessus, comprenant les étapes ci-dessous consistant à :
- fournir un corps de base (1) en un matériau polymère translucide ou transparent, pouvant être traversé par un rayonnement avec une faible absorption pour des plages spectrales de la lumière visible, et
- appliquer au moins un revêtement colorant (2) sur le corps de base (1), dans lequel le revêtement colorant (2) est formé de manière préférée par une couche de peinture ou un film de peinture, dans lequel le revêtement colorant (2) absorbe autant que possible les plages spectrales de la lumière visible,
- mettre en place dans le revêtement colorant (2) une pluralité de perforations (3, 3', 3") ponctuelles qui pénètrent complètement dans le revêtement colorant (2) afin de permettre une transparence du corps de base (1),
- appliquer par-dessus le revêtement colorant (2) perforé une couche de vernis transparent (4) scellant le revêtement colorant (2) et les perforations (3, 3 ', 3") mises en place, dans lequel la couche de vernis transparent (4) peut être traversée par un rayonnement avec une faible absorption pour des plages spectrales de la lumière visible,
**caractérisé en ce que**
lors de la mise en place des perforations (3, 3', 3") ponctuelles, le diamètre D des perforations (3, 3', 3") est choisi de sorte que ledit diamètre se situe dans une plage comprise entre 50 µm et 175 µm, et **en ce que**
la distance A entre les centres M de perforations (3, 3 ', 3") adjacentes est choisie de sorte que ladite distance A se situe dans une plage comprise entre 1,0 et 5,0 fois le diamètre D des perforations (3, 3', 3") adjacentes, de sorte que les perforations (3, 3', 3 ") sont également remplies lors de l'application de la couche de vernis transparent (4).

8. Procédé de fabrication d'une pièce d'habillage transparente selon la revendication 7, **caractérisé en ce que** l'étape de mise en place des perforations ponctuelles (3, 3', 3") intervient au moyen d'un faisceau laser ou au moyen de plusieurs faisceaux laser.

9. Procédé de fabrication d'une pièce d'habillage transparente selon la revendication 7 ou 8, **caractérisé en ce que** l'étape de fourniture du corps de base (1) comprend un procédé de moulage par injection ou un procédé de thermoformage.
